# EUROPÄISCHE PATENTSCHRIFT

(11) **EP 0 760 425 B1**
(45) Veröffentlichungstag und Bekanntmachung des Hinweises auf die Patenterteilung: **15.11.2000**
(21) Anmeldenummer: 96111968.2
(22) Anmeldetag: 25.07.1996
(51) Int. Cl.: F02M 43/00

(54) **Einspritzeinrichtung**
Injection device
Dispositif d'injection

(30) Priorität: 30.08.1995 DE 19531812; 15.05.1996 DE 19619522
(43) Veröffentlichungstag der Anmeldung: 05.03.1997
(73) Patentinhaber: ROBERT BOSCH GMBH, 70442 Stuttgart (DE)
(72) Erfinder: Rembold, Helmut, Dipl.-Ing., 70435 Stuttgart (DE); Teegen, Walter, Dipl.-Ing., 71336 Waiblingen (DE)

(56) Entgegenhaltungen:
- EP-A- 0 285 190
- EP-A- 0 553 364
- DE-A- 3 536 021
- DE-C- 4 407 052
- PATENT ABSTRACTS OF JAPAN vol. 94, no. 010 & JP 06 288316 A (MITSUBISHI HEAVY IND LTD), 11.Oktober 1994,

## Beschreibung

### Stand der Technik

Die Erfindung geht aus von einer Einspritzeinrichtung zum kombinierten Einspritzen von Kraftstoff, insbesondere Dieselkraftstoff, und von Zusatzflüssigkeit, insbesondere Wasser, in mindestens einen Brennraum einer Brennkraftmaschine, insbesondere eines Dieselmotors, der im Oberbegriff des Anspruchs 1 definierten Gattung.

Die kombinierte Einspritzung von Kraftstoff und Zusatzflüssigkeit dient dazu, insbesondere bei Dieselmotoren die Stickoxyd- und Rußemission zu senken.

Bei einer bekannten Einspritzeinrichtung dieser Art (DE 44 07 052 C1) wird die Kraftstoffbeaufschlagung des Druckgenerators in der Zumeßvorrichtung für die Zusatzflüssigkeit dadurch erreicht, daß der Pumpenkolben der Kraftstoffeinspritzpumpe durch einen zusätzlichen Nocken, der mit dem Nocken für den Hubantrieb des Pumpenkolbens einen Doppelnocken bildet, in der Einspritzpause erneut zur Hubbewegung angetrieben wird und damit Kraftstoff fördert, der über ein 4/2-Wege-Magnetventil mit Federrückstellung der Magnetventilanordnung dem Druckgenerator zugeführt wird. Mittels eines vom Druck dieses Kraftstoffs beaufschlagten Trennkolbens wird dem Düsenraum der Einspritzdüse eine entsprechende Wassermenge zugeführt, die eine entsprechende Kraftstoffmenge aus dem Düsenraum verdrängt und über das 4/2-Wege-Magnetventil abfließen läßt. Die Kraftstoffmenge, die über das Einspritzventil bei jedem Förderhub des Pumpenkolbens abgespritzt wird, wird durch die Verdrehung des Pumpenkolbens gesteuert. Eine Veränderung der Kraftstoffeinspritzmenge durch Verdrehen des Pumpenkolbens bewirkt auch eine gleichartige Veränderung der in den Düsenraum eingedrückten Wassermenge im nachfolgenden Hub des Pumpenkolbens unter der Wirkung des Zusatznockens. Damit wird immer ein festes Verhältnis von Kraftstoff zu Wasser eingehalten. Mittels eines weiteren 3/2-Wege-Magnetventil mit Federrückstellung der Magnetventilanordnung kann bei Bedarf die Einlagerung von Wasser in den Düsenraum gestoppt oder verändert werden.

### Vorteile der Erfindung

Die erfindungsgemäße Einspritzeinrichtung mit den kennzeichnenden Merkmalen des Anspruchs 1 hat demgegenüber den Vorteil, daß einerseits der Zusatznocken entfällt, an der Kraftstoffeinspritzpumpe also keine Änderungen vorgenommen werden müssen, und daß andererseits die Magnetventilanordnung wesentlich kostengünstiger realisiert werden kann. Zudem läßt sich die dem Düsenraum der Einspritzdüse zugeführte Flüssigkeitsmenge an Zusatzflüssigkeit durch einfache Steuerung der Magnetventilanordnung dem erforderlichen Bedarf individuell und hochgenau anpassen. Durch die in den weiteren Ansprüchen aufgeführten Maßnahmen sind vorteilhafte Weiterbildungen und Verbesserungen der im Anspruch 1 angegebenen Einspritzeinrichtung möglich.

Gemäß einer ersten Ausführungsform der Erfindung umfaßt der Druckgenerator einen über ein Rückschlagventil an einer Vorförderpumpe angeschlossenen Trennkolben, der durch Kraftstoffbeaufschlagung gegen eine Rückstellfeder verschiebbar ist und dabei einen Zusatzflüssigkeitsmenge verdrängt, einen mit dem Trennkolben verbundenen Federspeicher mit Speicherzylinder, Speicherfeder und Speicherkolben und einen den Verschiebeweg des Speicherkolbens sensierenden Weggeber. Zwischen dem der Einspritzdüse zugeordneten Rückschlagventil und der daran angeschlossenen Zumeßleitung ist ein hydraulisch gesteuertes Schaltelement angeordnet, das mit seinem Steuereingang am Förderausgang der Kraftstoffeinspritzpumpe angeschlossen und so ausgelegt ist, daß es oberhalb eines Drucks, der etwa dem vom Gleichdruckventil im Düsenraum eingestellten Standdruck entspricht, geschlossen ist. Die Magnetventilanordnung besteht aus preiswerten, eingangsseitig jeweils an den Förderausgang der Kraftstoffeinspritzpumpe, vorzugsweise über ein Rückschlagventil angeschlossenen 2/2-Wege-Magnetventilen mit Federrückstellung, von denen das erste Magnetventil ausgangsseitig an der Entlastungsleitung und das zweite Magnetventil ausgangsseitig an dem Trennkolben liegt.

Gemäß einer alternativen Ausführungsform der Erfindung, die für höhere Drehzahlen geeignet ist, besteht die Magnetventilanordnung wiederum aus den preiswerten 2/2-Wege-Magnetventilen mit Federrückstellung. Das erste Magnetventil ist jetzt eingangsseitig mit dem Förderausgang der Kraftstoffeinspritzpumpe, vorzugsweise über ein Rückschlagventil, und ausgangsseitig mit der Entlastungsleitung und das zweite Magnetventil eingangsseitig mit dem Trennkolben und ausgangsseitig ebenfalls mit der Entlastungsleitung verbunden. Zwischen den beiden Eingängen der Magnetventile ist ein weiteres Rückschlagventil mit zum Trennkolben bzw. zum zweiten Magnetventil weisender Durchflußrichtung angeordnet, dessen Durchflußquerschnitt größer ist als der des Magnetventils.

Bei diesen vorgenannten Ausführungsformen ist eine Steuerung der Magnetventilanordnung in der Weise vorgesehen, daß für die Dauer der Kraftstoffeinspritzung die beiden Magnetventile schließen, mit Ende der Kraftstoffeinspritzung das zweite Magnetventil öffnet, auf ein erstes vom Weggeber abgeleitetes Steuersignal hin, das bei Erreichen eines vorgegebenen Verschiebewegs des Speicherkolbens im Federspeicher ausgelöst wird, das zweite Magnetventil wieder schließt und das erste Magnetventil wieder öffnet und auf ein zweites vom Weggeber ausgelöstes Steuersignal hin, das nach Rückkehr des Speicherkolbens des Federspeichers in seine Grundstellung ausgelöst wird, das zweite Magnetventil wieder öffnet.

Gemäß einer alternativen Ausführungsform der Erfindung weist der Druckgenerator einen Druckübersetzer mit einem gegen eine Rückstellfeder verschiebbaren Stufenkolben auf, der mit seinem durchmessergrößeren Kolben eine an der Magnetventilanordnung angeschlossene Steuerkammer und mit seinen durchmesserkleineren Kolben eine an der Vorförderpumpe angeschlossene Verdrängungskammer begrenzt. Zur Zumeßvorrichtung für die Zusatzflüssigkeit gehört ferner ein Verteiler mit einem Verteilerzylinder, der eine Mehrzahl von gleichmäßig am Umfang verteilt angeordnete radiale Abflußbohrungen aufweist und mit einer darin rotierenden, von der Kraftstoffeinspritzpumpe angetriebenen Verteilerwelle, die eine an der Verdrängungskammer des Druckübersetzers angeschlossene, bei Rotation der Verteilerzelle nacheinander mit jeder Abflußbohrung in Verbindung tretende Verteilerbohrung aufweist. An jeder Abflußbohrung ist eine zu der Zumeßvorrichtung führende Zumeßleitung angeschlossen. Die Magnetventilanordnung wird 5 hier von mindestens einem ersten und einem zweiten 2/2-Wege-Magnetventil mit Federrückstellung realisiert, die hintereinander geschaltet sind, wobei das erste Magnetventil eingangsseitig an dem Förderausgang, der Kraftstoffeinspritzpumpe und das zweite Magnetventil ausgangsseitig an der Entlastungsleitung angeschlossen ist. Die Steuerkammer des Druckübersetzers ist über ein Rückschlagventil mit zum Druckübersetzer weisender Durchflußrichtung an der Verbindungsleitung zwischen den beiden Magnetventilen angeschlossen. Die Steuerung der Magnetventile erfolgt in der Weise, daß für die Dauer der Kraftstoffeinspritzung das erste Magnetventil schließt, mit Ende der Kraftstoffeinspritzung das erste Magnetventil öffnet und nach einer vorgegebenen Zeitspanne das zweite Magnetventil schließt, das dann wieder öffnet, wenn der Pumpenkolben der Kraftstoffeinspritzpumpe seinen oberen Totpunkt durchlaufen hat.

### Zeichnung

Die Erfindung ist anhand von in der Zeichnung dargestellten Ausführungsbeispielen in der nachfolgenden Beschreibung näher erläutert. Es zeigen:
- Figur 1: ein Blockschaltbild einer Einspritzeinrichtung zum kombinierten Einspritzen von Kraftstoff und Zusatzflüssigkeit,
- Figur 2: ein Blockschaltbild einer modifizierten Zumeßvorrichtung für die Zusatzflüssigkeit in der Einspritzeinrichtung in Figur 1,
- Figur 3: ein Funktionsdiagramm der Einspritzeinrichtung in Figur 1,
- Figur 4: ein Blockschaltbild einer Einspritzeinrichtung zum kombinierten Einspritzen von Kraftstoff und Zusatzflüssigkeit gemäß einem weiteren Ausführungsbeispiel,
- Figur 5: eine Hubkurve des Pumpenkolbens der Kraftstoffeinspritzpumpe in der Einspritzeinrichtung in Figur 4,
- Figur 6: einen Längsschnitt eines modifizierten Druckübersetzers in der Zumeßvorrichtung für die Zusatzflüssigkeit in der Einspritzeinrichtung in Figur 4, schematisch dargestellt.

### Beschreibung der Ausführungsbeispiele

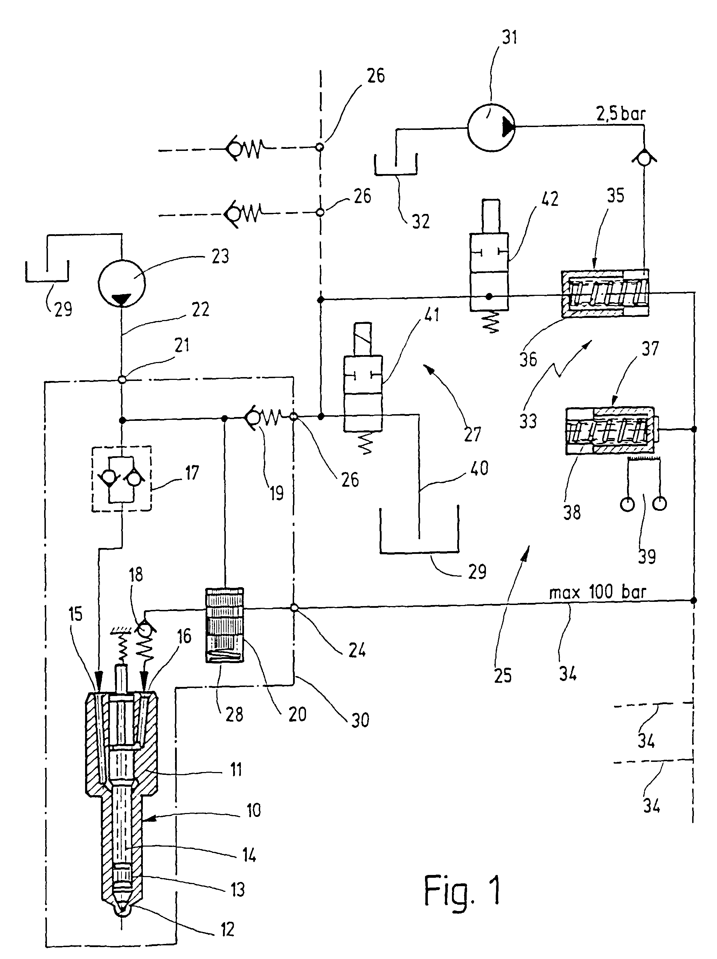

Die in Figur 1 im Blockschaltbild dargestellte Einspritzeinrichtung zum kombinierten Einspritzen von Kraftstoff, hier Dieselkraftstoff, und von Zusatzflüssigkeit, hier Wasser, in eine Brennkraftmaschine, hier Dieselmotor, weist eine der Anzahl der Zylinder des Dieselmotors entsprechende Zahl von Einspritzdüsen 10 zur Kraftstoffeinspritzung in den Brennraum des jeweiligen Verbrennungszylinders auf, die jeweils einen Düsenkörper 11 mit endseitiger Einspritzöffnung 12 und dieser vorgelagertem Düsenraum 13 sowie eine die Einspritzöffnung 12 steuernden Düsennadel 14 umfaßt, die im Düsenkörper 11 axial verschieblich geführt ist. Die Düsennadel 14 liegt in bekannter Weise unter Federdruck auf einem im Düsenkörper 11 ausgebildeten Ventilsitz auf und hebt bei einem ausreichenden Kraftstoffdruck im Düsenraum 13 (Einspritzdruck) vom Ventilsitz ab, wodurch die Einspritzöffnung 12 zum Abspritzen des Gemisches aus Kraftstoff und Wasser in den Brennraum des Verbrennungszylinders freigegeben wird. Der Düsenraum 13 steht mit zwei Düsenanschlüssen 15, 16 in Verbindung. Die Einspritzdüse 10 ist zusammen mit einem Gleichdruckventil 17, einem ersten Rückschlagventil 18, einem zweiten Rückschlagventil 19 und einem hydraulisch gesteuerten Schaltelement 20 zu einer Baueinheit, den sog. Düsenmodul 30, zusammengefaßt, die jeweils einem Verbrennungszylinder des Dieselmotors zugeordnet ist. Der Düsenmodul 30 weist einen Anschluß 21 für eine zu einer Kraftstoffeinspritzpumpe 23 führenden Einspritzleitung 22, einen Anschluß 24 für eine Wasser-Zumeßvorrichtung 25 und einen Anschluß 26 für eine die Zumeßvorrichtung 25 an die Kraftstoffeinspritzpumpe 23 anschließende Magnetventilanordnung 27 auf. Das Gleichdruckventil 17 verbindet den Anschluß 21 für die Einspritzleitung 22 mit dem Düsenanschluß 15 am Düsenkörper 11, das zweite Rückschlagventil 19 verbindet den Anschluß 21 für die Einspritzleitung 22 mit dem Anschluß 26 für die Magnetventilanordnung 27, wobei die Durchflußrichtung des zweiten Rückschlagventil 19 vom Anschluß 21 zum Anschluß 26 weist. Der Anschluß 24 für die Zumeßvorrichtung 25 ist über das hydraulisch gesteuerte Schaltelement 20 und dem ersten Rückschlagventil 18 mit dem Düsenanschluß 16 am Düsenkörper 11 verbunden. Der Steueranschluß des Schaltelements 20 ist mit dem Anschluß 21 für die Einspritzleitung 22 verbunden. Eine Rückstellfeder 28 überführt das Schaltelement 20 in seine Offenstellung, wenn der Druck am Steueranschluß einen Wert entspricht, der dem vom Gleichdruckventil 17 im Düsenraum 13 eingestellten Standdruck unterschreitet. Oberhalb dieses Druckwertes ist das Schaltelement 20 geschlossen und sperrt den Durchfluß zur Einspritzdüse 10. Die Kraftstoffeinspritzpumpe 23 von bekannter Bauart, die sowohl eine Reiheneinspritzpumpe als auch eine Verteilereinspritzpumpe sein kann, ist in Figur 1 nur symbolisch angedeutet. Bei einer Reiheneinspritzpumpe ist in bekannter Weise für jede Einspritzdüse 10 ein separates Pumpenelement vorgesehen, in dem ein eine Hubbewegung ausführender Pumpenkolben Kraftstoff aus einem Kraftstoffvorrat 29 ansaugt und mit Einspritzdruck in die Einspritzleitung 22 fördert. Bei einer Verteilereinspritzpumpe ist lediglich ein Pumpenkolben vorgesehen, der in bekannter Weise eine Rotationsbewegung und gleichzeitig eine Hubbewegung ausführt, wobei bei jedem Pumpenkolbenhub eine von mehreren Verteilerbohrungen angesteuert wird, die jeweils an einer Einspritzleitung 22 angeschlossen sind.

Die Zumeßvorrichtung 25 weist eine Vorförderpumpe 31 zum Fördern von Wasser aus einem Wasserbehälter 32 und einen Druckgenerator 33 auf, der das von der Vorförderpumpe 31 geförderte Wasser unter einen Druck setzt, der oberhalb des Standdruckes liegt, der vom Gleichdruckventil 17 bei geschlossener Einspritzdüse 10 im Düsenraum 13 aufrecht erhalten wird. Der Ausgang des Druckgenerators 33 ist über eine Zumeßleitung 34 mit dem Anschluß 24 des Düsenmoduls 30 verbunden. Zur Erzeugung des Wasserdrucks wird der Kraftstoffdruck der Kraftstoffeinspritzpumpe 23 herangezogen, wozu der Eingang des Druckgenerators 33 über die Magnetventilanordnung 27 mit der Kraftstoffeinspritzpumpe 23 in Verbindung steht, genauer gesagt, an den Anschluß 26 des Düsenmoduls 30 angeschlossen ist.

Der Druckgenerator 33 besteht bei dem Ausführungsbeispiel in Figur 1 aus einem hier nur schematisch dargestellten Trennkolben 35, der einen Kraftstoffraum von einem Wasserraum trennt und gegen den Druck im Kraftstoffraum mit einer Rückstellfeder 36 belastet ist, und einem ebenfalls nur schematisch dargestellten Federspeicher 37 mit Speicherzylinder, Speicherfeder und Speicherkolben, der einen Speicherraum begrenzt und von der Speicherfeder 38 gegen den Speicherdruck im Speicherraum belastet ist. Der Ausgang der Vorförderpumpe 31 ist mit dem Wasserraum des Trennkolbens 35 und dieser mit dem Speicherraum des Federspeichers 37 verbunden, der seinerseits über die Zumeßleitung 34 am Anschluß 24 des Düsenmoduls 30 liegt. Der Federspeicher 37 ist mit einem Weggeber 39 ausgerüstet, der den Verschiebeweg des Speicherkolbens im Federspeicher 37 sensiert.

Die Magnetventilanordnung 27 besteht aus zwei preiswerten 15 2/2-Wege-Magnetventilen 41, 42 mit Federrückstellung, die eingangsseitig mit dem Anschluß 26 am Düsenmodul 30 verbunden sind. Ausgangsseitig liegt das erste Magnetventil 41 an einer Entlastungs- oder Rücklaufleitung 40 und das zweite Magnetventil 42 an dem Kraftstoffraum des Trennkolbens 35. Beide Magnetventile 41, 42 sind in Grundstellung, d.h. bei unerregtem Magneten, in Offenstellung und geben den Kraftstoffdurchfluß frei. Der Anschluß weiterer Düsenmodule 30 an die Zumeßvorrichtung 25 und an die Magnetventilanordnung 27 ist durch 25 strichlinierte Darstellung weiterer Anschlüsse 26 von Düsenmodulen 30 und weiterer Zumeßleitungen 34 angedeutet.

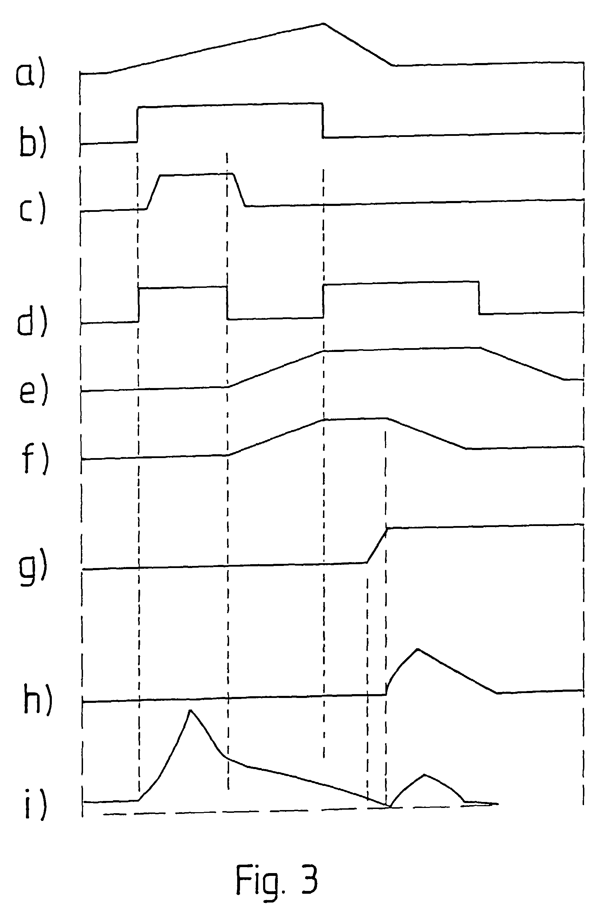

Eine hier nicht dargestellte elektronische Steuereinheit, der auch das Wegsignal des Weggebers 39 zugeführt wird, 30 steuert nunmehr die Ventilanordnung 27 so, daß sie während des Förderhubs des Pumpenkolbens der Kraftstoffeinspritzpumpe 23 einerseits mit Kraftstofförderbeginn schließt und andererseits mit Einspritzende öffnet und den Förderausgang der Kraftstoffeinspritzpumpe 23 für eine vorbestimmbare Dauer des Restförderhubs des Pumpenkolbens mit dem Druckgenerator 33 verbindet. Im einzelnen ist der Steuerablauf im Funktionsdiagramm der Figur 3 dargestellt. Dabei zeigt die Kurve a den Hub des Pumpenkolbens in der Kraftstoffeinspritzpumpe 23, die Kurve b den Hub des ersten Magnetventils 41, die Kurve c den Hub der Düsennadel 14 in der Einspritzdüse 10, die Kurve d den Hub des zweiten Magnetventils 42, die Kurve e den Verschiebeweg des Trennkolbens 35, die Kurve f den Verschiebeweg des Speicherkolbens im Federspeicher 37, die Kurve g den Hub des Schaltelements 20, die Kurve h den Druckverlauf am Eingang des Rückschlagventils 18 und die Kurve i den Druckverlauf in der Einspritzleitung 22. Während des Kolbenhubs des Pumpenkolbens der Kraftstoffeinspritzpumpe 23 (Kurve a) setzt der Aufbau des Einspritzdruckes mit Schließen der beiden Magnetventile 41, 42 ein, wodurch der Anschluß 26 am Düsenmodul 30 abgesperrt wird. Ist der Einspritzdruck erreicht, so öffnet die Einspritzdüse (Kurve c und Kurve i). Mit Öffnen des zweiten Magnetventils 42 (Kurve d) wird der Einspritzvorgang beendet, die Düsennadel 14 setzt sich wieder auf den Nadelsitz auf und schließt die Einspritzdüse 10 (Kurve c). Der während des weiter andauernden Förderhubs des Pumpenkolbens (Kurve a) geförderte Kraftstoff wird über das geöffnete zweite Magnetventil 42 dem Trennkolben 35 zugeleitet. Der hier anstehende Kraftstoffdruck wird dazu benutzt, im Wassersystem einen Druck aufzubauen und den Federspeicher 37 mit der erforderlichen Wassermenge zu versorgen (Kurve e und f). Der Weggeber 39 überwacht den Verschiebeweg des Speicherkolbens im Federspeicher 37 und gibt ein entsprechendes Istsignal an die Steuereinheit. Ist ein vorgegebener Verschiebeweg des Speicherkolbens erreicht, d.h. eine bestimmte Wassermenge im Federspeicher 37 eingespeichert, so schließt die Steuereinheit das zweite Magnetventil 42 wieder (Kurve d). Während dieser Zeit ist das Schaltelement 20 geschlossen Erst wenn der Druck am Anschluß 21 unter dem vom Gleichdruckventil 17 vorgegebene Standdruck abfällt, öffnet das Schaltelement 20 (Kurve g), und die im Federspeicher 37 eingespeicherte Wassermenge wird über die Zumeßleitung 34, das geöffnete Schaltelement 20 und das Rückschlagventil 18 in den Düsenraum 13 eingelagert (Kurve h). Dabei wird eine gleiche Menge an Kraftstoff aus dem Düsenraum 13 verdrängt, die über das Gleichdruckventil 17, über das zweite Rückschlagventil 19 und über das inzwischen wieder geöffnete erste Magnetventil 41 in die Entlastungsleitung 40 abfließt und zum Kraftstoffvorrat 29 zurückfließt. Der Druck hinter dem Schaltelement 20 (Kurve h) hat sich nahezu abgebaut, wenn der Speicherkolben des Federspeichers 37 in seine Grundstellung zurückgekehrt ist (Kurve f). Die Rückkehr des Speicherkolbens in seine Grundstellung wird von der Steuereinheit anhand des Istsignals des Weggebers 39 erkannt, die daraufhin das zweite Magnetventil 42 wieder öffnet (Kurve d). Infolge des damit über das zweite und erste Magnetventil 42, 41 aus dem Kraftstoffraum des Trennkolbens 35 in die Entlastungsleitung 40 abfließenden Kraftstoffs wird der Trennkolben 35 durch die Rückstellfeder 36 in seine Grundstellung zurückgeschoben.

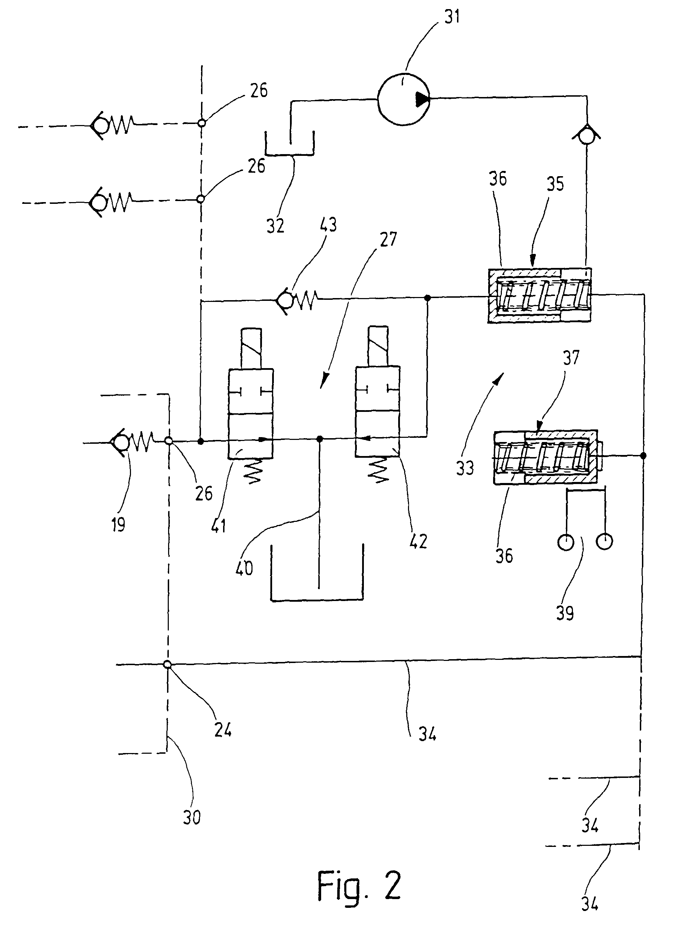

Eine Modifikation der Zumeßvorrichtung 25 für Wasser in Verbindung mit der Ventilanordnung 27, die für hohe Drehzahlen, also für schnellaufende Dieselmotoren, geeignet ist, ist in Figur 2 dargestellt. Soweit Bauteile mit denen in Figur 1 übereinstimmen, sind sie mit gleichen Bezugszeichen versehen:

Die Ventilanordnung 27 besteht hier wiederum aus den beiden 2/2-Wege-Magnetventilen 41, 42 mit Federrückstellung und einem zusätzlichen Rückschlagventil 43. Das erste Magnetventil 41 ist eingangsseitig wiederum an dem Anschluß 26 des Düsenmoduls 30 und ausgangsseitig an der Entlastungsleitung 40 angeschlossen. Das zweite Magnetventil 42 ist eingangsseitig an dem Eingang des Trennkolbens 35 - und damit an diesen Kraftstoffraum - und ausgangsseitig ebenfalls an der Entlastungsleitung 40 angeschlossen. Das Rückschlagventil 43 ist einerseits mit dem Anschluß 26 und andererseits mit dem Eingang des Trennkolbens 35 verbunden, liegt also zwischen den beiden Eingängen der Magnetventile 41, 42, wobei die Durchflußrichtung des Rückschlagventils 43 zum Trennkolben 35 bzw. zum zweiten Magnetventil 42 weist. Der Durchflußquerschnitt des Rückschlagventils 43 ist wesentlich größer bemessen als der des zweiten Magnetventils 42, so daß sich nach Öffnen des zweiten Magnetventils 42 zur Beendigung des Einspritzvorgangs auch bei geöffnetem Magnetventil 42 ein Druck im Kraftstoffraum des Trennkolbens 35 aufbauen kann. Die Funktionsweise der Einspritzpumpe mit der modifizierten Magnetventilanordnung 27 ist die gleiche wie zu Figur 1 beschrieben. Auch gilt das in Figur 3 dargestellte Funktionsdiagramm in gleicher Weise.

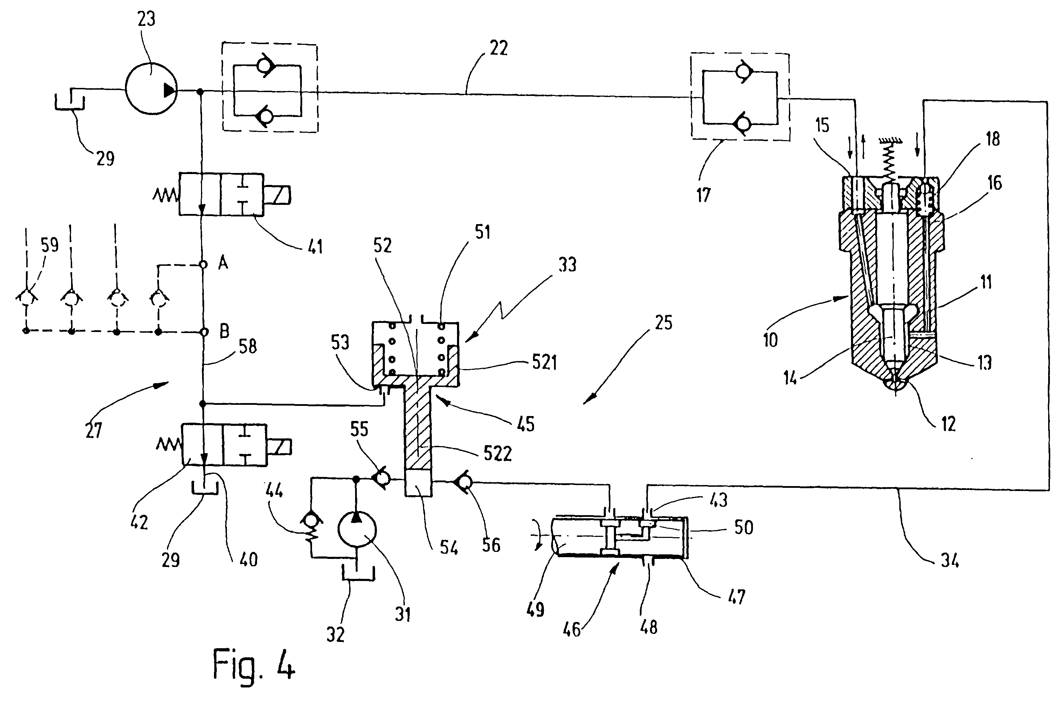

In Figur 4 ist ein weiteres Ausführungsbeispiel für eine Einspritzeinrichtung im Blockschaltbild dargestellt. Soweit Bauteile dieser Einspritzeinrichtung mit denen in Figur 1 übereinstimmen, sind sie mit gleichen Bezugszeichen versehen.

Die baugleiche Düse 10 ist in gleicher Weise wie in Figur 1 einerseits über das Gleichdruckventil 17 und die Einspritzleitung 22 mit dem Förderausgang der Kraftstoffeinspritzpumpe 23 und andererseits über das Rückschlagventil 18 und die Zumeßleitung 34 mit der Zumeßvorrichtung 25 für Wasser verbunden. Zwischen der Kraftstoffeinspritzpumpe 23 und der Zumeßvorrichtung 25 ist wiederum die Magnetventilanordnung 27 eingeschaltet. Die Zumeßvorrichtung 25 weist wie in Figur 1 eine Vorförderpumpe 31, die Wasser aus einem Wasserbehälter 32 über ein Druckhalteventil 44, das ungefähr auf 5 bar eingestellt ist, im Kreislauf zurück zum Wasserbehälter 32 fördert, sowie den Druckgenerator 33 auf, der hier als Druckübersetzer 45 ausgebildet ist. Zur Zumeßvorrichtung 25 gehört ferner ein Verteiler 46, der einen Verteilerzylinder 47 mit einer Mehrzahl von gleichmäßig über den Umfang verteilt angeordneten Abflußbohrungen 48 sowie eine im Verteilerzylinder 47 rotierende Verteilerwelle 49 mit einer am Umfang der Verteilerwelle 49 radial mündenden Verteilerbohrung 50 aufweist, die bei der Rotation der Verteilerwelle 49 aufeinanderfolgend vorübergehend mit je 10 einer der Abflußbohrungen 48 zur Deckung gelangt. Der Druckübersetzer 45 weist einen von einer Kolbenfeder 51 belasteten Stufenkolben 52 auf, dessen durchmessergrößere Kolbenteil 521 eine Steuerkammer 53 und dessen durchmesserkleinere Kolbenteil eine Verdrängungskammer 54 begrenzt. Die Verdrängungskammer 54 ist über ein Einlaßventil 55 mit dem Ausgang der Vorförderpumpe 31 und über ein Auslaßventil 56 mit der Verteilerbohrung 50 in der Verteilerwelle 49 des Verteilers 46 verbunden, an dessen Abflußbohrungen 48 jeweils eine zu einer Einspritzdüse 10 führende Zumeßleitung 34 angeschlossen ist. Die Zahl der Abflußbohrungen 48 entspricht damit der Zahl der vorhandenen Einspritzdüsen 10, die wiederum durch die Anzahl der vorhandenen Verbrennungszylinder des Dieselmotors bestimmt ist. Einlaßventil 55 und Auslaßventil 56 sind als Rückschlagventile ausgebildet.

Die Magnetventilanordnung 27 besteht wiederum aus zwei 2/2-Wege-Magnetventilen 41 und 42 mit Federrückstellung. Die beiden Magnetventile 41, 42 sind in Reihe geschaltet, wobei 30 das erste Magnetventil 41 eingangsseitig mit einem Förderausgang der hier als Verteilereinspritzpumpe ausgebildeten Kraftstoffeinspritzpumpe 23 und das zweite Magnetventil 42 ausgangsseitig mit der Entlastungsleitung 40 verbunden ist, die zum Kraftstoffvorrat 29 zurückführt. Die Kolbenfeder 51 greift an dem durchmessergrößeren Kolbenteil 521 des Stufenkolbens 52 an und sucht diesen gegen den Druck in der Steuerkammer 53 zu verschieben. Die Verteilerwelle 49 im Verteiler 46 wird von dem hier nicht dargestellten Verteilerkolben der Kraftstoffeinspritzpumpe 23 synchron angetrieben. Es ist auch möglich, die Funktion des Verteilers 46 durch zusätzliche Bohrungen und Steuernuten in den Verteilerkolben unmittelbar zu integrieren.

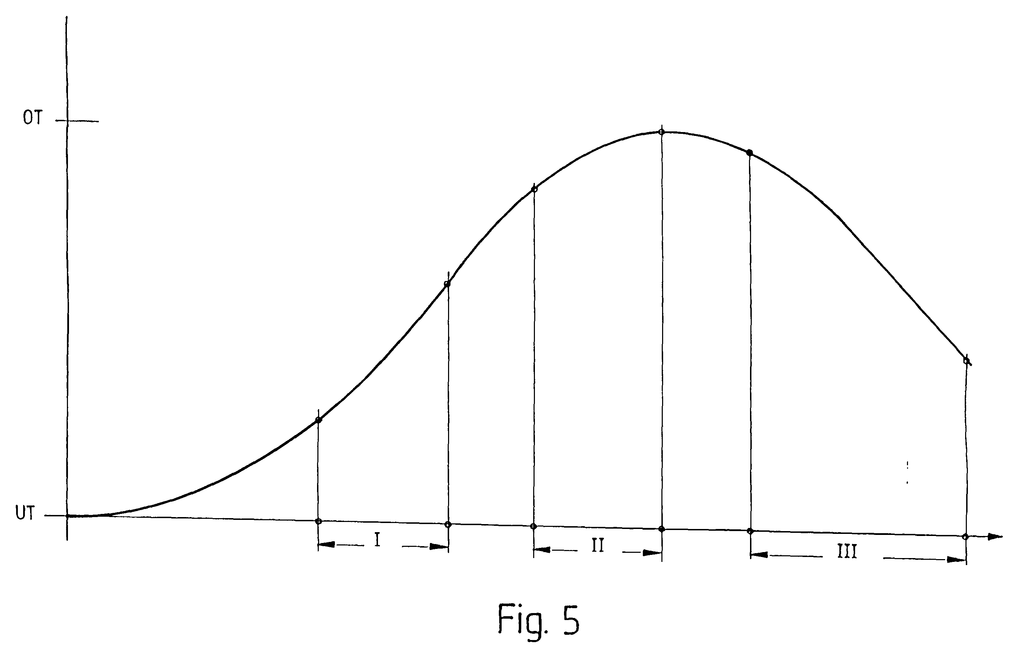

Mittels einer elektronischen Steuereinheit werden auch hier die Magnetventile 41, 42 gesteuert, und zwar in der Weise, daß das erste Magnetventil 41 für die Dauer der Kraftstoffeinspritzung durch die Einspritzdüse 10 geschlossen ist, mit Ende der Kraftstoffeinspritzung öffnet und nach einer vorgegebenen Zeitspanne das zweite Magnetventil 41 schließt. Das zweite Magnetventil 42 öffnet dann wieder, wenn der Verteilerkolben der Kraftstoffeinspritzpumpe 23 seinen oberen Totpunkt im Hubweg durchlaufen hat. Der Hubweg des Verteilerkolbens der Kraftstoffeinspritzpumpe 23 ist in Figur 5 über den Drehwinkel des den Verteilerkolben in eine Hubbewegung versetzenden Nockens, dem sog. Nockenwinkel, dargestellt. Anhand dieser Hubkurve kann die Funktion der Einspritzeinrichtung in Figur 4 wie folgt erläutert werden

Beim Förderhub durchläuft der Verteilerkolben der Kraftstoffeinspritzpumpe 23 die in Figur 5 dargestellte Hubkurve von seinem unteren Totpunkt UT bis zu seinem oberen Totpunkt OT. Bei dem daran sich anschließenden Saughub durchläuft der Verteilerkolben die Hubkurve in Figur 5 von seinem oberen Totpunkt OT bis zu seinem unteren Totpunkt UT. Beim Förderhub beginnt nach Schließen der sog. Steuerkante durch den Verteilerkolben bei geschlossenem Magnetventil 41 die Kraftstofförderung. Dies ist der Bereich I in Figur 5, innerhalb dessen Kraftstoff über die Einspritzdüse 10 in den Brennraum im Verbrennungszylinder des Dieselmotors - zusammen mit dem in dem Düsenraum 13 vorgelagerten Wasser eingespritzt wird. Die Einspritzung wird beendet durch das Öffnen des ersten Magnetventils 41, so daß die Schließzeit des ersten Magnetventils 41 auch die Menge des über die Einspritzdüse 10 abgespritzten Kraftstoffs bestimmt. Mit Öffnen des Magnetventils 41 strömt der Kraftstoff zunächst über das offene Magnetventil 42 in die Entlastungsleitung 40 und von dort zurück in den Kraftstoffvorrat 29. Nach einem vorgegebenen zeitlichen Abstand, der von der der Einspritzdüse 10 zuzusetzenden Wassermenge bestimmt ist, schließt das zweite Magnetventil 42, und in dem verbleibenden Förderhub des Verteilerkolbens fließt der Kraftstoff in die ringförmige Steuerkammer 53 des Druckübersetzers 45. Dies ist der Bereich II in Figur 5. Der Stufenkolben 52 des Druckübersetzers 45 weicht unter Zusammenpressen der Kolbenfeder 51 nach oben aus und zieht in die Verdrängungskammer 54 über das Einlaßventil 55 eine entsprechende Menge Wasser nach. Der Steuerdruck in der Steuerkammer 53 beträgt etwa 25 bar, liegt also deutlich unter dem Düsenöffnungsdruck in der Einspritzleitung 22. Dadurch, daß die Kraftstofförderung in die Steuerkammer 53 immer bis zum oberen Totpunkt OT des Verteilerkolbens erfolgt, werden störende Druckwellen vermieden. Die in die Verdrängungskammer 54 angesaugte Wassermenge bestimmt sich jeweils aus dem Zuschaltzeitpunkt des zweiten Magnetventils 42 vor dem oberen Totpunkt OT des Verteilerkolbens. Im nachfolgenden Saughub des Verteilerkolbens der Kraftstoffeinspritzpumpe 23 wird ein Abfließen des Kraftstoffs aus der Steuerkammer 53 durch das Rückschlagventil 57 verhindert. Im Bereich III in Figur 5 korrespondiert die Verteilerbohrung 50 mit der an der 35 Zumeßleitung 34 angeschlossenen Abflußbohrung 48, und das Wasser wird jetzt aus der Verdrängungskammer 54 über das Auslaßventil 56, die Zumeßleitung 34 und das Rückschlagventil 18 in den Düsenraum 11 der Einspritzdüse 10 eingelagert. Die dabei verdrängte Kraftstoffmenge fließt über das Gleichdruckventil 17 und die Einspritzleitung 22 in den Saugraum der Kraftstoffeinspritzpumpe 23 zurück.

Wird anstelle einer Kraftstoffeinspritzpumpe 23 der Verteilerbauart eine Reiheneinspritzpumpe verwendet, bei welcher für jede Einspritzdüse 10 ein separates Pumpenelement mit Pumpenkolben vorgesehen ist, wird für jedes Pumpenelement ein erstes Magnetventil 41 benötigt. In diesem Fall ist die Verbindungsleitung 58 zwischen den beiden Magnetventil 41,42 an den Stellen A und B aufzutrennen und wieder über eine Parallelschaltung aus mehreren Rückschlagventilen 59, wie sie in Figur 4 strichliniert dargestellt ist, zu verbinden. Die Anzahl der Rückschlagventile 59 entspricht der Zahl der vorhandenen Pumpenelemente der Kraftstoffeinspritzpumpe, damit der Zahl der zu versorgenden Einspritzdüsen 10 und damit der Anzahl der vorhandenen ersten Magnetventile 41. Die Rückschlagventile 59 sind dabei so eingebaut, daß ihre Durchflußrichtung immer von dem jeweiligen ersten Magnetventil 41 zu dem nur einmal vorhandenen zweiten Magnetventil 42 weist. Der Antrieb der Verteilerwelle 49 erfolgt bei der Reiheneinspritzpumpe über die die Pumpenkolben der einzelnen Pumpenelemente antreibende Nockenwelle der Reiheneinspritzpumpe.

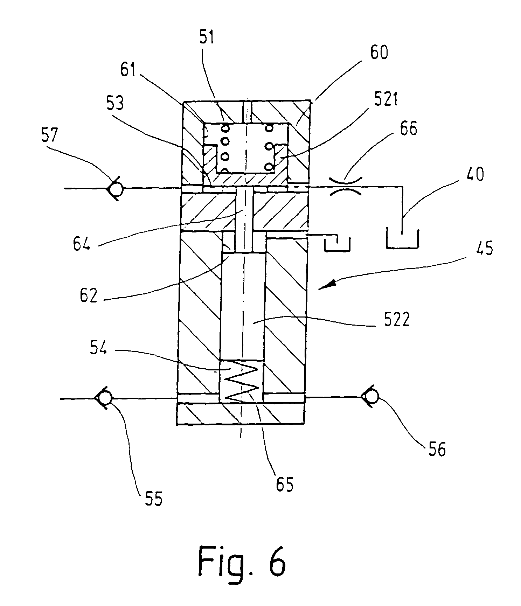

In Figur 6 ist ein modifizierter Druckübersetzer 45 im Längsschnitt schematisch dargestellt, der ebenfalls in der Einspritzeinrichtung gemäß Figur 4 verwendet werden kann. Hier sind die beiden Kolben 521 und 522 nicht zu einem einstückigen Stufenkolben vereinigt, sondern getrennt in Bohrungen 61,62 eines Gehäuses 60 axial verschieblich 35 geführt. In einer dritten Bohrung 63, die koaxial mit den beiden Bohrungen 61, 62 ist, ist ein Stößel 64 axial verschieblich geführt, der stirnseitig einerseits an dem Kolben 521 und andererseits an dem Kolben 522 kraftschlüssig anliegt. Die kraftschlüssige Anlage wird durch die Kolbenfeder 51 und eine in der Verdrängungskammer 54 einliegende Andruckfeder 65 hergestellt. Die Verdrängungskammer 54 ist in gleicher Weise wie in Figur 4 über das Einlaßventil 55 an die Vorförderpumpe 31 und über das Auslaßventil 56 an den Verteiler 46 anzuschließen. Die Steuerkammer 53 liegt eingangsseitig über das Rückschlagventil 57 an der Magnetventilanordnung 27. Ausgangsseitig ist sie über eine Drossel 66 mit der Entlastungsleitung 40 verbunden. Eine solche Drossel 66 zum Entleeren des Steuerraums 53 bis zum nächsten Pumpenkolbenhub der Kraftstoffeinspritzpumpe 23 ist auch bei dem Druckübersetzer 45 in Figur 4 vorgesehen.

Durch diese Ausbildung des Druckübersetzers 45 ist die Realisierung der Stufenbohrung zur Aufnahme der Kolben 521, 522 weniger kritisch als bei dem einstückigen Stufenkolben 52 in Figur 4, da auf die genaue Fluchtung der verschiedenen Bohrungen 61 - 63 verzichtet werden kann. Bei der Dimensionierung ist darauf zu achten, daß die Gegenkraft auf den wasserseitigen Kolben 522 kleiner ist als die Summe aus der Federkraft der Feder 65 und der Kraft des Wasserdrucks in der Verdrängungskammer 54. Die Gegenkraft ergibt sich resultierend aus der Querschnittsfläche des Stößels 64 und dem Druck in der Steuerkammer 53.

Die Erfindung ist nicht auf die vorstehend beschriebenen Ausführungsbeispiele beschränkt. So kann als Zusatzflüssigkeit anstelle von Wasser auch ein alternativer Kraftstoff, beispielsweise Alkoholkraftstoff, verwendet werden, durch welchen die Zündbedingungen des Dieselkraftstoffs verbessert werden.

## Patentansprüche

1. Einspritzeinrichtung zum kombinierten Einspritzen von Kraftstoff, insbesondere Dieselkraftstoff, und von Zusatzflüssigkeit, insbesondere Wasser, in mindestens einen Brennraum einer Brennkraftmaschine, insbesondere eines Dieselmotors, mit mindestens einer dem Brennraum zugeordneten Einspritzdüse (10) zur Kraftstoffeinspritzung, die einen Düsenkörper (11) mit Einspritzöffnung (12) und einen dieser vorgelagerten, mit zwei separaten Düsenanschlüssen (15, 16) in Verbindung stehenden Düsenraum (13), sowie eine die Einspritzöffnung (12) verschließende, unter Einspritzdruck öffnende Düsennadel (14) aufweist, mit einer Kraftstoffeinspritzpumpe mit mindestens einem Pumpenkolben zum Fördern von unter Einspritzdruck stehendem Kraftstoff zu mindestens einem Förderausgang, der über ein Gleichdruckventil (17) mit dem einen Düsenanschluß (15) der Einspritzdüse (10) verbunden ist, mit einer über eine Zumeßleitung (34) und einem nachgeordneten Rückschlagventil (18) mit dem anderen Düsenanschluß (16) der Einspritzdüse (10) verbundenen Zumeßvorrichtung (25) zum Einbringen einer Flüssigkeitsmenge an Zusatzflüssigkeit in den Düsenraum (13) der Einspritzdüse (10), die eine Vorförderpumpe (31) und einen Druckgenerator (33) aufweist, der durch Beaufschlagung mit Kraftstoff aus der Kraftstoffeinspritzpumpe (23) in der Zumeßleitung (34) einen oberhalb des vom Gleichdruckventil (17) außerhalb der Kraftstoffeinspritzung im Düsenraum (13) der Einspritzdüse (10) aufrechterhaltenen Standdrucks liegenden Flüssigkeitsdruck erzeugt, und mit einer zwischen Kraftstoffeinspritzpumpe (23) und Druckgenerator (33) angeordneten Magnetventilanordnung (27) zum Beaufschlagen des Druckgenerators (33) mit Kraftstoff, die eine Entlastungsleitung (40) aufzusteuern vermag, dadurch gekennzeichnet, daß der kraftstoffeinspritzpumpenseitige Anschluß der Magnetventilanordnung (27) an dem mindestens einen, dem Gleichdruckventil (17) vorgeordneten Förderausgang (26) vorgenommen ist und daß die Magnetventilanordnung (27) so gesteuert ist, daß sie während des Förderhubs des Pumpenkolbens der Kraftstoffeinspritzpumpe (23) einerseits mit Kraftstoffförderbeginn schließt und andererseits mit Einspritzende öffnet und den Förderausgang der Kraftstoffeinspritzpumpe (23) für eine vorbestimmbare Dauer des Restförderhubs des Pumpenkolbens mit dem Druckgenerator (33) der Zumeßvorrichtung (25) verbindet.

2. Einrichtung nach Anspruch 1, dadurch gekennzeichnet, daß der Druckgenerator (33) einen an einer Vorförderpumpe (31) für die Zusatzflüssigkeit angeschlossenen Trennkolben (35), der durch Kraftstoffbeaufschlagung gegen eine Rückstellfeder (36) verschiebbar ist und dabei eine Zusatzflüssigkeitsmenge verdrängt, einen mit dem Trennkolben (35) verbundenen Federspeicher (37) mit Speicherzylinder, Speicherfeder (38) und Speicherkolben und einen den Verschiebeweg des Speicherkolbens sensierenden Weggeber (39) aufweist, daß zwischen dem der Einspritzdüse (10) zugeordneten Rückschlagventil (18) und der daran angeschlossenen Zumeßleitung (24) ein hydraulisch gesteuertes Schaltelement (20) angeordnet ist, das mit seinem Steuereingang am Förderausgang der 10 Kraftstoffeinspritzpumpe (23) angeschlossen und so ausgelegt ist, daß es oberhalb eines Drucks, der etwa dem vom Gleichdruckventil (17) eingestellten Standdruck entspricht, den Düsenanschluß (16) sperrt.

3. Einrichtung nach Anspruch 2, dadurch gekennzeichnet, daß die Einspritzdüse (10), das an dem einen Düsenanschluß (15) angeschlossene Gleichdruckventil (17), das an dem anderen Düsenanschluß (16) angeschlossene Rückschlagventil (18) und das 20 Schaltelement (20) zu einer Baueinheit (Düsenmodul 30) vereinigt sind, die einen mit dem Gleichdruckventil (17) verbundenen ersten Anschluß (21) für eine zum Förderausgang der Kraftstoffeinspritzpumpe (23) führende Einspritzleitung (22), einen mit dem Schaltelement (20) verbundenen zweiten Anschluß (24) für die Zumeßleitung (34) und einen vorzugsweise über ein zweites integriertes Rückschlagventil (19) mit dem ersten Anschluß (21) verbundenen dritten Anschluß (26) für die Magnetventilanordnung (27) aufweist, und daß 30 der Steuereingang des Schaltelements (20) am ersten Anschluß (21) liegt.

4. Einrichtung nach Anspruch 2 oder 3, dadurch gekennzeichnet, daß die Magnetventilanordnung (27) zwei eingangsseitig jeweils an dem Förderausgang der Kraftstoffeinspritzpumpe (23), vorzugsweise an dem dritten Ausgang (26) der Baueinheit (Düsenmodul 30), angeschlossene 2/2-Wege-Magnetventile (41, 42) mit Federrückstellung aufweist, von denen das erste Magnetventil (41) ausgangsseitig an der Entlastungsleitung (40) und das zweite Magnetventil (42) ausgangsseitig an dem Trennkolben (35) liegt.

5. Einrichtung nach Anspruch 2 oder 3, dadurch gekennzeichnet, daß die Magnetventilanordnung (27) 10 zwei 2/2-Wege-Magnetventile (41, 42) mit Federrückstellung aufweist, daß das erste Magnetventil (41) eingangsseitig mit dem Förderausgang der Kraftstoffeinspritzpumpe (23), vorzugsweise mit dem dritten Ausgang (26) der Baueinheit (Düsenmodul 30), und ausgangsseitig mit der Entlastungsleitung (40) und das zweite Magnetventil (42) eingangsseitig mit dem Trennkolben (35) und ausgangsseitig mit der Entlastungsleitung (40) verbunden ist und daß zwischen den Eingängen von erstem und zweitem Magnetventil 20 (41, 42) ein Rückschlagventil (43) mit zum zweiten Magnetventil (42) hin weisender Durchflußrichtung angeordnet ist, dessen Durchflußquerschnitt größer ist als der des zweiten Magnetventils (42).

6. Einspritzeinrichtung nach Anspruch 4 oder 5, gekennzeichnet durch eine elektronische Steuereinheit, die für die Dauer der Kraftstoffeinspritzung die beiden Magnetventile (41, 42) schließt, mit Ende der Kraftstoffeinspritzung das zweite Magnetventil (42) öffnet, auf ein erstes Sensorsignal des Weggebers (39) hin, das eine Verschiebung des Speicherkolbens im Federspeicher (37) um einen vorgegebenen Verschiebeweg signalisiert, das zweite Magnetventil (42) wieder schließt und das erste Magnetventil (41) öffnet und auf ein zweites Sensorsignal des Weggebers (39) hin, das die Rückkehr des Speicherkolbens im Federspeicher (37) in seine Grundstellung signalisiert, das zweite Magnetventil (42) wieder öffnet .

7. Einrichtung nach Anspruch 1, dadurch gekennzeichnet, 5 daß der Druckgenerator (33) einen Druckübersetzer (45) mit einem gegen eine Rückstellfeder (51) verschiebbaren Stufenkolben (52) aufweist, der mit seinem durchmessergrößeren Kolbenteil (251) eine an der Magnetventilanordnung (27) angeschlossene Steuerkammer (53) und mit seinem durchmesserkleineren Kolbenteil (522) eine an der Vorförderpumpe (31) für die Zusatzflüssigkeit angeschlossene Verdrängungskammer (54) begrenzt, daß die Zumeßvorrichtung (25) für die Zusatzflüssigkeit einen 15 Verteiler (46) mit einem Verteilerzylinder (47), der eine Mehrzahl von gleichmäßig am Umfang verteilt angeordneten radialen Abflußbohrungen (48) besitzt, und mit einer darin rotierenden, von der Kraftstoffeinspritzpumpe (23) angetriebenen Verteilerwelle (49) aufweist, die eine an der Verdrängungskammer (54) des Druckübersetzers (45) angeschlossene, bei Rotation der Verteilerwelle (49) nacheinander mit jeder der Abflußbohrungen (48) in Verbindung tretende Verteilerbohrung (50) besitzt, und daß die Zumeßleitung (34) für die Einspritzdüse (10) an einer Abflußbohrung (50) des Verteilers (46) angeschlossen ist.

8. Einrichtung nach Anspruch 7, dadurch gekennzeichnet, 30 daß die Verdrängungskammer (54) mit einem Einlaß- und einem Auslaßventil (55, 56) versehen ist, die beide als Rückschlagventile ausgebildet sind.

9. Einrichtung nach Anspruch 7 oder 8, dadurch gekennzeichnet, daß die Magnetventilanordnung (27) mindestens ein erstes 2/2-Wege-Magnetventil (41) mit Federrückstellung und ein zweites 2/2-Wege Magnetventil (42) mit Federrückstellung aufweist, daß die beiden Magnetventile (41, 42) in Reihe geschaltet sind, wobei das erste Magnetventil (41) eingangsseitig an dem Förderausgang der Kraftstoffeinspritzpumpe (23) und das zweite Magnetventil (42) ausgangsseitig an der Entlastungsleitung (40) angeschlossen ist.

10. Einrichtung nach Anspruch 9, dadurch gekennzeichnet, daß die Kraftstoffeinspritzpumpe (23) eine einen bei seiner Hubbewegung rotierenden Verteilerkolben aufweisende Verteilereinspritzpumpe ist und daß die Verteilerwelle (49) des Verteilers (46) der Zumeßvorrichtung (25) von dem Verteilerkolben synchron angetrieben oder in den Verteilerkolben selbst integriert ist.

11. Einrichtung nach Anspruch 9, dadurch gekennzeichnet, daß die Kraftstoffeinspritzpumpe (23) eine Reiheneinspritzpumpe ist, die einen von einer Nockenwelle zur Hubbewegung angetriebenen Pumpenkolben pro Förderausgang besitzt, daß die Verteilerwelle (49) des Verteilers (46) der Zumeßvorrichtung (25) von der Nockenwelle angetrieben ist, daß die Magnetventilanordnung (27) eine der Anzahl der Förderausgänge entsprechende Zahl von ersten Magnetventilen (41) mit Federrückstellung aufweist, und daß die Verbindung der ersten Magnetventile (41) mit dem zweiten Magnetventil (42) jeweils über ein Rückschlagventil (59) mit zum zweiten Magnetventil (42) weisender Durchflußrichtung vorgenommen ist.

12. Einrichtung nach einem der Ansprüche 7 bis 11, gekennzeichnet durch eine elektronische Steuereinheit, die für die Dauer der Kraftstoffeinspritzung das erste Magnetventil (41) schließt, mit Ende der Kraftstoffeinspritzung das erste Magnetventil (41) öffnet und nach einer vorgegebenen Zeitspanne das zweite Magnetventil (42) schließt und nach Durchlaufen des oberen Totpunkts des Pumpen- oder Verteilerkolbens der Kraftstoffeinspritzpumpe (23) das zweite 10 Magnetventil (42) wieder öffnet.

13. Einrichtung nach einem der Ansprüche 7 bis 12, dadurch gekennzeichnet, daß der Stufenkolben (52) zweiteilig ausgeführt ist, daß am durchmessergrößeren Kolben (521) die Rückstellfeder (51) und am durchmesserkleineren Kolben (522) eine Andruckfeder (65) angreift und daß die beiden Kolben (521, 522) sich mit ihren einander zugekehrten Stirnseiten unter der Wirkung von Rückstellfeder (51) und Andruckfeder (65) an einem zwischen ihnen angeordneten, verschiebbar geführten Stößel (64) abstützen.

## Claims

1. Injection device for the combined injection of fuel, in particular diesel fuel, and of additional liquid, in particular water, into at least one combustion space of an internal combustion engine, in particular of a diesel engine, with at least one injection nozzle (10) for fuel injection, which is assigned to the combustion space and which has a nozzle body (11) with injection orifice (12) and a nozzle space (13) located upstream of the said injection orifice and connected to two separate nozzle connections (15, 16), and also a nozzle needle (14) closing the injection orifice (12) and opening under injection pressure, with a fuel injection pump having at least one pump piston for feeding fuel which is under injection pressure to at least one feed outlet which is connected to the one nozzle connection (15) of the injection nozzle (10) via a constant-pressure valve (17), with a metering device (25) which is connected to the other nozzle connection (16) of the injection nozzle (10) via a metering line (34) and a downstream non-return valve (18) and which introduces a liquid quantity of additional liquid into the nozzle space (13) of the injection nozzle (10), the said metering device having a prefeed pump (31) and a pressure generator (33) which, by loading with fuel from the fuel injection pump (23), generates in the metering line (34) a liquid pressure which is above the static pressure maintained in the nozzle space (13) of the injection nozzle (10) by the constant-pressure valve (17) outside fuel injection, and with a solenoid valve arrangement (27), arranged between the fuel injection pump (23) and the pressure generator (33), for loading the pressure generator (33) with fuel, the said solenoid valve arrangement being capable of opening a relief line (40), characterized in that the connection of the solenoid valve arrangement (27) on the same side as the fuel injection pump is carried out at the at least one feed outlet (26) located upstream of the constant-pressure valve (17), and in that the solenoid valve arrangement (27) is controlled in such a way that, during the feed stroke of the pump piston of the fuel injection pump (23), the said solenoid valve arrangement, on the one hand, closes with the start of fuel feed and, on the other hand, opens with the end of injection and connects the feed outlet of the fuel injection pump (23) to the pressure generator (33) of the metering device (25) for a predeterminable duration of the remaining feed stroke of the pump piston.

2. Device according to Claim 1, characterized in that the pressure generator (33) has a separating piston (35) which is connected to a prefeed pump (31) for the additional liquid and which, by being loaded with fuel, can be displaced counter to a return spring (36) and at the same time displaces an additional liquid quantity, a spring accumulator (37) connected to the separating piston (35) and having an accumulator cylinder, accumulator spring (38) and accumulator piston, and a displacement transducer (39) sensing the displacement travel of the accumulator piston, and in that between the non-return valve (18) assigned to the injection nozzle (10) and the metering line (24) connected thereto is arranged a hydraulically controlled switching element (20) which is connected with its control inlet to the feed outlet of the fuel injection pump (23) and is designed in such a way that it blocks the nozzle connection (16) above a pressure which corresponds approximately to the static pressure set by the constant-pressure valve (17).

3. Device according to Claim 2, characterized in that the injection nozzle (10), the constant-pressure valve (17) connected to the one nozzle connection (15), the non-return valve (18) connected to the other nozzle connection (16) and the switching element (20) are combined to form a structural unit (nozzle module 30) which has a first connection (21), connected to the constant-pressure valve (17), for an injection line (22) leading to the feed outlet of the fuel injection pump (23), a second connection (24), connected to the switching element (20), for the metering line (34), and a third connection (26), connected to the first connection (21) preferably via a second integrated non-return valve (19), for the solenoid valve arrangement (27), and in that the control inlet of the switching element (20) is located at the first connection (21).

4. Device according to Claim 2 or 3, characterized in that the solenoid valve arrangement (27) has two 2/2-way solenoid valves (41, 42) with spring return, which in each case are connected on the inlet side to the feed outlet of the fuel injection pump (23), preferably to the third outlet (26) of the structural unit (nozzle module 30), and of which the first solenoid valve (41) is located on the outlet side at the relief line (40) and the second solenoid valve (42) is located on the outlet side at the separating piston (35).

5. Device according to Claim 2 or 3, characterized in that the solenoid valve arrangement (27) has two 2/2-way solenoid valves (41, 42) with spring return, in that the first solenoid valve (41) is connected on the inlet side to the feed outlet of the fuel injection pump (23), preferably to the third outlet (26) of the structural unit (nozzle module 30), and on the outlet side to the relief line (40), and the second solenoid valve (42) is connected on the inlet side to the separating piston (35) and on the outlet side to the relief line (40), and in that between the inlets of the first and second solenoid valves (41, 42) is arranged a non-return valve (43) which has a throughflow direction pointing towards the second solenoid valve (42) and the throughflow cross section of which is larger than that of the second solenoid valve (42).

6. Injection device according to Claim 4 or 5, characterized by an electronic control unit which closes the two solenoid valves (41, 42) for the duration of fuel injection, opens the second solenoid valve (42) at the end of fuel injection, in response to a first sensor signal from the displacement transducer (39) which signals a displacement of the accumulator piston in the spring accumulator (37) over a predetermined displacement travel, closes the second solenoid valve (42) again and opens the first solenoid valve (41), and, in response to a second sensor signal from the displacement transducer (39) which signals the return of the accumulator piston in the spring accumulator (37) into its basic position, opens the second solenoid valve (42) again.

7. Device according to Claim 1, characterized in that the pressure generator (33) has a pressure intensifier (45) with a stepped piston (52) which is displaceable counter to a return spring (51) and which, with its piston part (251) of larger diameter, delimits a control chamber (53) connected to the solenoid valve arrangement (27) and, with its piston part (522) of smaller diameter, delimits a positive-displacement chamber (54) connected to the prefeed pump (31) for the additional liquid, in that the metering device (25) for the additional liquid has a distributor (46) with a distributor cylinder (47) which possesses a plurality of radial outflow bores (48) arranged so as to be distributed uniformly on the circumference, and with a distributor shaft (49) which rotates in the said distributor cylinder and is driven by the fuel injection pump (23) and which possesses a distributor bore (50) which is connected to the positive-displacement chamber (54) of the pressure intensifier (45) and, during rotation of the distributor shaft (49), comes successively into connection with each of the outflow bores (48), and in that the metering line (34) for the injection nozzle (10) is connected to an outflow bore (50) of the distributor (46).

8. Device according to Claim 7, characterized in that the positive-displacement chamber (54) is provided with an inlet and an outlet valve (55, 56) which are both designed as non-return valves.

9. Device according to Claim 7 or 8, characterized in that the solenoid valve arrangement (27) has at least one first 2/2-way solenoid valve (41) with spring return and one second 2/2-way solenoid valve (42) with spring return, in that the two solenoid valves (41, 42) are connected in series, the first solenoid valve (41) being connected on the inlet side to the feed outlet of the fuel injection pump (23) and the second solenoid valve (42) being connected on the outlet side to the relief line (40).

10. Device according to Claim 9, characterized in that the fuel injection pump (23) is a distributor injection pump which has a distributor piston rotating during its stroke movement, and in that the distributor shaft (49) of the distributor (46) of the metering device (25) is driven synchronously by the distributor piston or is integrated into the distributor piston itself.

11. Device according to Claim 9, characterized in that the fuel injection pump (23) is an in-line injection pump which possesses, for each feed outlet, a pump piston driven by a camshaft for the stroke movement, in that the distributor shaft (49) of the distributor (46) of the metering device (25) is driven by the camshaft, in that the solenoid valve arrangement (27) has a number of first solenoid valves (41) with spring return which corresponds to the number of feed outlets, and in that the connection of the first solenoid valves (41) to the second solenoid valve (42) is made in each case via a non-return valve (59) having a throughflow direction pointing towards the second solenoid valve (42).

12. Device according to one of Claims 7 to 11, characterized by an electronic control unit which closes the first solenoid valve (41) for the duration of fuel injection, opens the first solenoid valve (41) at the end of fuel injection and closes the second solenoid valve (42) after a predetermined time span, and after the top dead centre of the pump piston or distributor piston of the fuel injection pump (23) has been passed, opens the second solenoid valve (42) again.

13. Device according to one of Claims 7 to 12, characterized in that the stepped piston (52) is designed in two parts, in that the return spring (51) acts on the piston (521) of larger diameter and a pressure spring (65) acts on the piston (522) of smaller diameter, and in that the two pistons (521, 522) are supported with their mutually confronting end faces, under the effect of the return spring (51) and pressure spring (65), on a displaceably guided tappet (64) arranged between them.

## Revendications

1. Installation d'injection pour injecter de manière combinée du carburant notamment du gasoil et un additif liquide notamment de l'eau, dans au moins une chambre de combustion d'un moteur à combustion interne notamment d'un moteur diesel comprenant :
- au moins un injecteur (10) associé à une chambre de combustion pour l'injection de carburant, cet injecteur comprenant un corps (11) avec un orifice d'éjection (12) et en amont de celui-ci, une chambre d'injecteur (13) communicant avec deux branchements d'injecteur (15, 16) distincts, ainsi qu'une aiguille d'injecteur (14) fermant l'orifice d'éjection (12) et l'ouvrant sous l'effet de la pression d'injection,
- une pompe d'injection de carburant ayant au moins un piston pour fournir du carburant à la pression d'injection à au moins une sortie d'alimentation reliée par l'intermédiaire d'une soupape isobar (17) à un branchement (15) de l'injecteur (10),
- un dispositif de dosage de liquide (25) relié par une conduite de dosage (34) et un clapet antiretour (18) en aval, avec l'autre branchement (16) de l'injecteur (10) pour introduire la quantité d'additif liquide dans la chambre (13) de l'injecteur (10), cette installation comprenant une pompe de préalimentation (31) et un générateur de pression (33) sollicité par le carburant de la pompe d'injection de carburant (23) qui génère dans la conduite de dosage (34) une pression de liquide, supérieure à la pression statique maintenue par la soupape isobar (17) en dehors de l'injection de carburant dans la chambre (13) de l'injecteur (10), et
- un dispositif à distributeurs (27) prévu entre la pompe d'injection de carburant (23) et le générateur de pression (33) pour fournir en carburant le générateur de pression (33), pour commander l'ouverture d'une conduite de décharge (40),
caractérisée en ce que
- le dispositif à distributeurs à tiroir (27) du côté de la pompe d'injection de carburant est branché sur au moins une sortie d'alimentation (26) en amont de la soupape isobar (17) et
- le dispositif à distributeurs (27) est commandé pour que pendant la course d'alimentation du piston de pompe, la pompe d'injection (23) d'une part se ferme au début du transfert de carburant et d'autre part s'ouvre à la fin de l'injection et la sortie de transfert de la pompe d'injection de carburant (23) est reliée pendant une durée prédéterminée de la course de transfert, restant du piston de pompe, avec le générateur de pression (33) du dispositif de dosage (25).

2. Installation selon la revendication 1,
caractérisée en ce que
- le générateur de pression (33) comprend un piston séparateur (35) raccordé pour l'additif liquide à une pompe de préalimentation (31), ce piston pouvant coulisser sous la sollicitation du carburant contre la force d'un ressort de rappel (36) et refouler ainsi une quantité d'additif liquide,
- un accumulateur à ressort (37) est relié au piston séparateur (35) avec un cylindre accumulateur, un ressort accumulateur (38) et un piston accumulateur,
- un capteur de déplacement (39) détecte le coulissement du piston accumulateur, et
- entre le clapet antiretour (18) associé à l'injecteur (10) et la conduite de dosage (24) reliée à celui-ci, il est prévu un élément de commutation à commande hydraulique (20) dont l'entrée de commande est reliée à la sortie de la pompe d'injection de carburant (23) et au-dessus d'une pression correspondant sensiblement à la pression statique réglée par la soupape isobar (17), il ferme le branchement de buse (16).

3. Installation selon la revendication 2,
caractérisée en ce que
l'injecteur (10), la soupape isobar (17) reliée à un branchement (15) de l'injecteur, le clapet antiretour (18) relié à l'autre branchement (16) de l'injecteur et l'élément de commutation (20) sont réunis en un ensemble (module d'injecteur 30) qui comprend un premier branchement (21) relié à la soupape isobar (17) pour une conduite d'injection (22) reliée à la sortie d'alimentation de la pompe d'injection (23), un second branchement (24) relié à l'élément de commutation (20) pour la conduite de dosage (34) et un troisième branchement (26) relié de préférence par l'intermédiaire d'un second clapet antiretour (19), intégré au premier branchement (21) pour le dispositif à distributeur (27), et
l'entrée de commande de l'élément de commutation (20) est reliée au premier branchement (21).

4. Installation selon les revendications 2 et 3,
caractérisé en ce que
le dispositif à distributeurs (27) comprend deux distributeurs à tiroir 2/2 voies à électroaimant (41, 42) et rappel par ressort, reliés par l'entrée chaque fois à la sortie d'alimentation de la pompe d'injection de carburant (23) de préférence à la troisième sortie (26) de l'ensemble (module d'injecteur 30), le premier distributeur (41) étant relié par sa sortie à la conduite de décharge (40) et le second distributeur (42) étant relié en sortie au piston séparateur (35).

5. Installation selon les revendications 2 et 3, caractérisée en ce que
- le dispositif à distributeurs (27) comprend deux distributeurs à tiroirs à 2/2 voies à électroaimant (41, 42) avec rappel par ressort,
- le premier distributeur (41) est relié en entrée à la sortie d'alimentation de la pompe d'injection de carburant (23) de préférence avec la troisième sortie (26) de l'ensemble (module d'injecteur 30) et en sortie à la conduite de décharge (40), et
- le second distributeur (42) est relié en entrée au piston séparateur (35) et en sortie à la conduite de décharge (40), et
- entre les entrées du premier et du second distributeur (41, 42) on a un clapet antiretour (43) dont le sens passant est dirigé vers le second distributeur (42) et sa section de passage est supérieure à celle du second distributeur (42) .

6. Installation d'injection selon la revendication 4 ou 5,
caractérisée en ce que
- une unité de commande électronique ferme les deux distributeurs (41, 42) pendant la durée de l'injection de carburant, et à la fin de l'injection, elle ouvre le second distributeur (42) suivant un premier signal du capteur de course (39) signalant un coulissement du piston de l'accumulateur à ressort (37) selon une course de translation prédéterminée,
- le second distributeur (42) se ferme de nouveau et le premier distributeur (41) s'ouvre,
- et en fonction d'un second signal du capteur de course (39), indiquant le retour du piston accumulateur dans l'accumulateur à ressort (37) dans sa position de base, le second distributeur à tiroir (42) s'ouvre de nouveau.

7. Installation selon la revendication 1,
caractérisée en ce que
- le générateur de pression (33) comprend un démultiplicateur de pression (45) avec un piston étagé (52) coulissant contre un ressort de rappel (51), ce piston délimitant avec sa partie de grand diamètre (251), une chambre de commande (53) reliée au dispositif à distributeur (27) et par sa partie de piston de petit diamètre (522) à une chambre de refoulement 54 raccordée à la pompe de préalimentation (31) d'additif liquide,
- le dispositif de dosage (25) possède pour l'additif liquide, un distributeur (46) avec un cylindre distributeur (47) ayant plusieurs perçages d'évacuation (48) disposés radialement et répartis régulièrement à la périphérie et un arbre distributeur (49) tournant dans le distributeur en étant entraîné par la pompe d'injection de carburant (23), cet arbre étant relié à la chambre de refoulement (54) du démultiplicateur de pression (45) et en cas de rotation de l'arbre distributeur (49), un perçage distributeur (50) de cet arbre venant en communication avec chacun des perçages de sortie (48) et
- la conduite de dosage (34) est reliée à un perçage de sortie (50) du distributeur (46) pour l'injecteur (10).

8. Installation selon la revendication 7,
caractérisée en ce que
la chambre de refoulement (54) comporte un clapet d'entrée et un clapet de sortie (55, 56), ces deux clapets étant réalisés sous forme de clapets d'arrêt.

9. Installation selon les revendications 7 ou 8,
caractérisée en ce que
le dispositif à distributeurs (27) comprend au moins un premier distributeur à tiroir 2/2 voies commandé par électroaimant (41) avec rappel par ressort et un second distributeur à tiroir 2/2 voies (42) à électroaimant avec ressort de rappel, et les deux distributeurs à tiroir (41, 42) sont branchés en série, le premier distributeur (41) étant relié en entrée à la sortie d'alimentation de la pompe d'injection de carburant (23) et la sortie du second distributeur à tiroir (42) étant reliée à la conduite de décharge (40) .

10. Installation selon la revendication 9,
caractérisée en ce que
la pompe d'injection de carburant (23) est une pompe d'injection distributrice ayant un piston distributeur tournant lors du mouvement de déplacement de la pompe et l'arbre (49) du distributeur (46) du dispositif de dosage (25) est entraîné en synchronisme par le piston distributeur ou est intégré directement dans celui-ci.

11. Installation selon la revendication 9,
caractérisée en ce que
- la pompe d'injection de carburant (23) est une pompe d'injection de type série ayant pour chaque sortie d'alimentation un piston de pompe entraîné en translation par un arbre à cames,
- l'arbre (49) du distributeur (46) du dispositif de dosage (25) étant entraîné par l'arbre à cames,
- le dispositif à distributeurs (27) ayant un nombre de sorties d'alimentation correspondant au nombre des premiers distributeurs (41) avec ressort de rappel et
- la liaison entre le premier distributeur (41) et le second distributeur (42) se fait chaque fois par l'intermédiaire d'un clapet antiretour (59) dans le sens passant et tourné vers le second distributeur (42).

12. Installation selon l'une des revendications 7 à 11,
caractérisée par
une unité de commande électronique qui ferme le premier distributeur à tiroir (41) pendant la durée de l'injection de carburant, ouvre le premier distributeur (41) à la fin de l'injection et après une durée prédéterminée, ferme le second distributeur (42) et après avoir atteint le point mort haut par le piston de pompe ou le distributeur, la pompe d'injection de carburant (23) ouvre de nouveau le second distributeur à tiroir (42).

13. Installation selon l'une des revendications 7 à 12,
caractérisée en ce que
- le piston étagé (52) est réalisé en deux parties, le piston (521) de grand diamètre recevant le ressort de rappel (51) et le piston (522) de petit diamètre étant soumis à l'action d'un ressort de rappel (65), et
- les deux pistons (521, 522) s'appuient par leurs faces frontales tournées l'une vers l'autre sous l'effet du ressort de rappel (51) et du ressort applicateur (65) contre un poussoir (64) coulissant, prévu entre ces deux faces.
